# EUROPÄISCHE PATENTSCHRIFT

(11) **EP 1 431 144 B1**
(45) Veröffentlichungstag und Bekanntmachung des Hinweises auf die Patenterteilung: **28.02.2007**
(21) Anmeldenummer: 03013101.5
(22) Anmeldetag: 10.06.2003
(51) Int. Cl.: B60S 1/08, H02K 7/106

(54) **Scheibenwischvorrichtung, insbesondere für ein Kraftfahrzeug**
Windscreen wiper device, in particular for a vehicle
Dispositif d'essuie-glace, en particulier pour un véhicule

(30) Priorität: 18.12.2002 DE 10259154
(43) Veröffentlichungstag der Anmeldung: 23.06.2004
(73) Patentinhaber: ROBERT BOSCH GMBH, 70442 Stuttgart (DE)
(72) Erfinder: Stubner, Achim, 77815 Buehl (DE); Hawighorst, Achim, 77830 Buehl (DE)

(56) Entgegenhaltungen:
- WO-A-20/04026643
- GB-A- 461 255
- US-A- 4 050 320

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die einen elektrisch reversierbaren Antrieb mit einer Ankerwelle aufweisen, welche eine Schnecke trägt, die ein Schneckenrad kämmt. Die Abtriebswellen eines derartiger Antriebe sind drehfest mit dem Schneckenrad verbunden und weisen eine Kurbel auf, die über ein Schubgestänge Wischerwellen antreibt, an denen Wischarme mit Wischblättern befestigt sind.

Weiterhin sind Scheibenwischvorrichtungen bekannt die über einen sogenannten Wischerdirektantrieb verfügen. Bei derartigen Scheibenwischvorrichtungen ist die Abtriebswelle des Schneckenrades des Antriebs, direkt oder über ein gleichförmig übersetzendes Getriebe, wie beispielsweise ein Planetengetriebe, mit einem Wischerarm verbunden. Problematisch ist hierbei, daß übliche Schneckengetriebe mit Übersetzungen von 50 zu 1 bis 70 zu 1 zwar einen hohen Wirkungsgrad besitzen, jedoch auch leicht durch die Einwirkung einer äusseren Kraft, beispielsweise durch einen über den Wischerarm streifenden Fahrtwind, verdreht werden können, da sie eine zu geringe Selbsthemmung verfügen.

Aus der DE 197 46 595 A1 ist ein Antrieb bekannt, der zum Bewegen von Bauteilen von Fahrzeugen vorgesehen ist. In dieser Schrift ist vorgeschlagen die Ankerwelle magnetisch gegen ein Verdrehen durch eine von außen wirkende Kraft blockiert ist. Eine derartig Lösung ist jedoch aufwendig, kostenintensiv und bei Scheibenwischvorrichtung nur beschränkt einsetzbar.

Weiterhin ist aus der GB-A-461 255 eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass durch die mechanische Blockierung des Schneckenrades durch ein Blockierelement die drehfest mit dem Schneckenrad verbundene Ankerwelle direkt blockiert wird, wodurch sich ein einfacher und wirkungsvoller Aufbau einer Selbsthemmung für eine Scheibenwischvorrichtung ergibt. Durch den mechanischen Aufbau, ist eine derartige Scheibenwischvorrichtung sehr robust im Betrieb und wirtschaftlich im Aufbau.

Durch die in den Unteransprüchen aufgeführten Maßnahmen ergeben sich vorteilhafte Weiterbildungen und Verbesserungen der im Hauptanspruch angegebenen Merkmale.

Ist die Ankerwelle axial verschiebbar, so kann dieser Freiheitsgrad vorteilhafterweise für eine Bewegung des Blockierelements verwendet werden, ohne dass weitere Funktionsbauteile, wie beispielsweise Magnetspulen, erforderlich sind.

Hierbei ist besonders vorteilhaft, wenn die Ankerwelle durch eine Klemmbrille gehalten ist, die elastische Mittel aufweist. Bei einer Bestromung des elektrischen Antriebs können die elastischen Mittel ausgelenkt werden, so dass sich einerseits eine feste Halterung der Ankerwelle, andererseits eine Aufhebung der Blockierung durch das Blockierelement ergibt.

Weiterhin ist es als vorteilhaft anzusehen, wenn das Blockierelement eine Rastnase aufweist, die in mindestens eine Nut am Schneckenrad einzugreifen vermag. Damit wird eine optimale Blockierung des Schneckenrades erzielt.

Weiterhin ist es vorteilhaft anzusehen, wenn das Blockierelement als Hebel ausgebildet ist, der mittels eines Lagers gelagert ist, das nahe an der Ankerwelle angeordnet ist, da auf diese Weise sehr große Hebelwege der Rastnase bei einer kleinen Auslenkung der Ankerwelle realisiert werden können. Hierbei ist es besonders vorteilhaft, wenn das Lager zwischen Ankerwelle und Abtriebswelle angeordnet ist, da auf diese Weise der Hebel als starre Wippe ausgebildet werden kann.

Eine besonders elegante Ausbildung wird erzielt, wenn das Schneckenrad axial einen ersten Bereich aufweist, der von der Schnecke gekämmt ist und einen zweiten Bereich aufweist, der mit dem Blockierelement in Wirkverbindung steht. Auf diese Weise können diskrete Positionen festgelegt werden, an denen das Schneckenrad bzw. die Abtriebswelle blockiert ist.

Hierbei ist es besonders vorteilhaft, wenn die Abtriebswelle direkt drehfest mit einem Wischerarm verbunden ist und der zweite Bereich des Schneckenrades entlang seines Umfangs mindestens eine Nut aufweist, die so angeordnet ist, dass das Blockierelement blockiert, wenn sich der Wischarm in der Parkposition befindet. Auf diese Weise ergibt sich eine optimale Blockierung, wenn der Wischerarm sich auf der Scheibe in der Parkposition befindet, die der Position entspricht, die der Wischerarm bei ausgeschalteter Scheibenwischvorrichtung einnimmt.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in einer schematischen Darstellung und
Figur 2 eine Seitenansicht eines Schneckenrandes mit Abtriebswelle einer erfindungsgemäßen Scheibenwischvorrichtung.

### Beschreibung des Ausführungsbeispiels

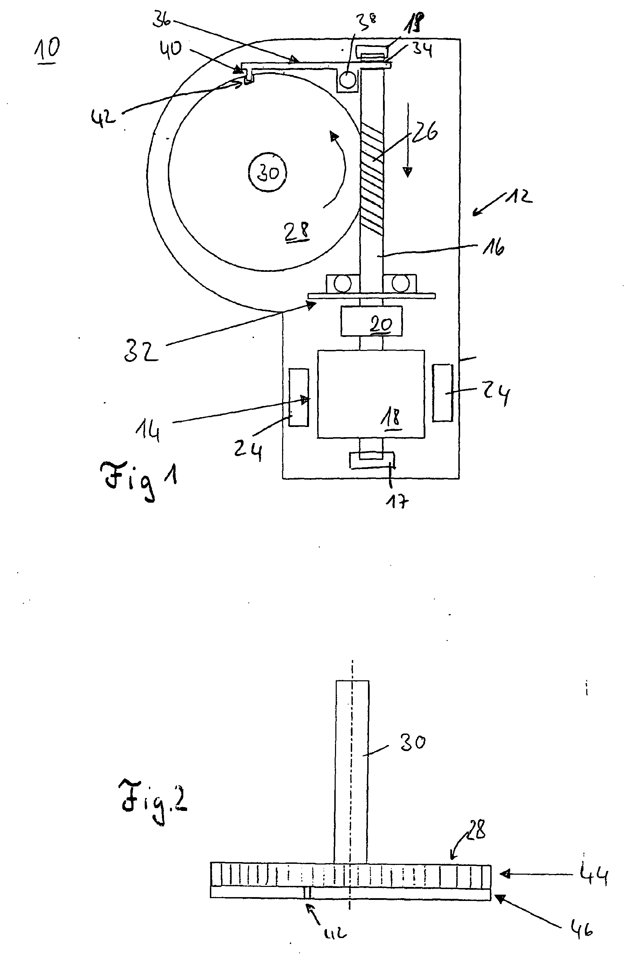

Figur 1 zeigt einer erfindungsgemäße Scheibenwischvorrichtung 10 in einer schematischen Darstellung. Diese besteht im Wesentlichen aus einem Antrieb 12, der einen Elektromotor 14 aufweist, der eine Ankerwelle 16 in eine rotatiorische Bewegung zu versetzten vermag. Die Ankerwelle 16 trägt an einem Ende ihrer Längserstreckung einen Anker 18, der im Wesentlichen aus einer Spule besteht, die über Bürsten 20 bestrombar ist. Der Anker 18 ist in einem Polgehäuse 22 aufgenommen, in dem zwei magnetische Pole 24 angeordnet sind.

Weiterhin weist die Ankerwelle 16 an ihrem, dem Anker 18 abgewandten Ende eine Schnecke 26 auf, die ein Schneckenrad 28 kämmt. Im Zentrum des Schneckenrades 28 ist eine Abtriebswelle 30 angeordnet, die gleichzeitig das Schneckenrad 28 radial lagert. Mit der Abtriebswelle 30 ist drehfest ein Wischerarm verbunden, der an seinem freien Ende ein Wischblatt trägt. Dies ist hier aus Gründen der Übersichtlichkeit nicht gezeichnet. Die Ankerwelle 16 ist an einem Ende ihrer Längserstreckung in einem ersten Wellenlager 17 gelagert, welches als einfaches Gleitlager ausgebildet ist. Natürlich kann hier auch ein Kugel- oder Nadellager vorgesehen sein. Am anderen Ende ihrer Längserstreckung ist die Ankerwelle 16 in einem weiteren Wellenlager 19 gelagert, das im Wesentlichen gleich wie das erste Wellenlager 17 ausgebildet ist. Natürlich können hier auch zusätzliche Elemente zur Verbesserung der axialen Fixierung vorgesehen sein. Zur Verbesserung der Lagerung der Ankerwelle 16 im Bereich des Ankers 18 und der Bürsten 20 ist in diesem Bereich noch eine Klemmbrille 32 zur Lagerung der Ankerwelle 16 vorgesehen, die jedoch über elastische Elemente verfügt, so dass ein geringes Axialspiel der Ankerwelle 16 möglich ist. Hierzu kann die Ankerwelle 16 auch noch eine umlaufende Nute aufweisen, die mit den eleastischen Elementen in Eingriff ist.

Weiterhin weist die Ankerwelle 16 an ihrem, dem Anker 18 abgewandten Ende einen Einsicht 34 auf, in dem ein Ende eines Blockierelements 36 eingreift. Das Blockierelement 36 ist als starrer Hebel von im Wesentlichen länglicher Gestalt ausgebildet, der durch ein Lager 38 wippenartig gelagert ist. Das Lager 38 ist zwischen Abtriebswelle 30 und Ankerwelle 16, nahe der Ankerwelle 16 ausgebildet, um eine große Auslenkung an dem Ende seiner Längserstreckung zu erzielen, dass der Ankerwelle 16 abgewandt ist. Eine kleine Verschiebung der Ankerwelle 16 verursacht so eine große Verschiebung des anderen Endes des Blockierelements 36, entsprechend dem Hebelgesetz. Zur Blockierung des Schneckenrades 28 weist das Blockierelement 36 an dem Ende seiner Längserstreckung eine Rastnase 40 auf, die der Ankerwelle 16 abgewandt, beziehungsweise dem Schneckenrad 28 zugewand ist. Diese Rastnase 40 ist derart ausgebildet, daß sie in die Nuten 42 des Schneckenrades 28 einzugreifen vermag und dieses somit blockieren kann.

Im Folgenden soll die Funktion der erfindungsgemäßen Scheibenwischvorrichtung erläutert werden. Wird der Anker 18 des Antriebs 12 über die Bürsten 20 bestromt, so wird dieser nicht nur in eine Rotationsbewegung versetzt, sondern vollführt aufgrund des magnetischen Flusses auch eine axiale Bewegung. Damit verschiebt sich die gesamte Ankerwelle 16 axial, wobei gegebenenfalls das elastische Element der Klemmbrille 32 ausgelenkt wird. Durch diese Verschiebung der Ankerwelle 16 wird das Blockierelement 36, welches mit der Nut 34 der Ankerwelle 16 in Eingriff steht, um sein Lager 38 gekippt. Dadurch wird die Rastnase 40 aus der Nute 42 gehoben und die Bewegung des Schneckenrades 28 freigegeben, was sich nun zu drehen beginnt.

In Figur 2 ist das Schneckenrad 28 mit der Abtriebswelle 30 einer erfindungsgemäßen Scheibenwischvorrichtung 10 in einer Seitenansicht gezeigt. In axialer Richtung weist das Schneckenrad im Wesentlichen einen erste Bereich 44 auf, der bezahnt ist und von der Schnecke 26 gekämmt wird. Angrenzend an den ersten Bereich 44 weist das Schneckenrad 28 in axialer Richtung einen zweiten Bereich 46 auf, der im Wesentlichen als runde Scheibe ausgebildet ist und denselben Durchmesser besitzt wie der erste Bereich 44. Innerhalb der Scheibenwischvorrichtung 10 ist ein derartiges Schneckenrad 28 so angeordnet, dass die Schnecke den ersten Bereich 44 kämmt und die Rastnase 40 des Blockierelementes 36 mit der Nute 42 zusammen wirkt. Nach einem Lösen der Blockierung gleitet die Rastnase 40 dann auf dem glatten Rand des zweiten Bereiches 46.

In einer Variation der Erfindung kann das Lager 38 auch auf der Seite der Ankerwelle 16 angeordnet sein, die der Abtriebswelle 30 abgewandt ist. Bei einer derartigen Ausbildung ist es auch möglich, daß das Blockierelement 36 nicht als starrer Hebel, sondern als federelastischer Kragarm ausgebildet ist, so daß das Lager 38 durch eine einfache Befestigung ersetzt werden kann.

In einer besonders einfachen Ausführung kann das Blockierelement 38 auch durch einen separaten Bewegungsmechanismus, also nicht mittels der Ankerwelle 16 bewegt werden. So ist es beispielsweise möglich, einen Elektromotor ein Piezoelektrisches Element oder einen Elektrohubmagneten mit einer Hubstange vorzusehen, die das Blockierelement 38 kippt oder die Hubstange selbst als Blockierelement 38 auszubilden.

## Patentansprüche

1. Scheibenwischvorrichtung (10), insbesondere für ein Kraftfahrzeug, mit mindestens einem, insbesondere elektrisch reversierbaren Antrieb (12), der eine Ankerwelle (16) aufweist, die eine Schnecke (26) trägt, welche ein Schneckenrad (28) kämmt, das eine Abtriebswelle (30) aufweist, wobei ein Blockierelement (36) vorgesehen ist, welches das Schneckenrad (28) bei stillstehender Ankerwelle (16) gegen ein Verdrehen mechanisch blockiert, **dadurch gekennzeichnet, dass** die Ankerwelle (16) zur Bewegung des Blockierelements (36) axial verschiebbar ist.

2. Scheibenwischvorrichtung (10) nach Anspruch 1, **dadurch gekennzeichnet, dass** die Ankerwelle (16) durch eine Klemmbrille (32) gehalten ist, die elastische Mittel aufweist.

3. Scheibenwischvorrichtung (10) nach einem der vorhergehenden Ansprüche, **dadurch gekennzeichnet, dass** das Blockierelement (36) das Schneckenrad (28) durch eine axiale Verschiebung der Ankerwelle (16) zu entriegeln vermag.

4. Scheibenwischvorrichtung (10) nach einem der vorhergehenden Ansprüche, **dadurch gekennzeichnet, dass** das Blockierelement (36) eine Rastnase (40) aufweist, die in mindestens eine Nut (42) am Schneckenrad (28) einzugreifen vermag.

5. Scheibenwischvorrichtung (10) nach einem der vorhergehenden Ansprüche, **dadurch gekennzeichnet, dass** das Blockierelement (36) als Hebel ausgebildet ist, der mittels eines Lagers (38) gelagert ist, das nahe an der Ankerwelle (16) angeordnet ist.

6. Scheibenwischvorrichtung (10) nach Anspruch 5, **dadurch gekennzeichnet, dass** das Lager (38) zwischen der Ankerwelle (16) und der Abtriebswelle (30) angeordnet ist.

7. Scheibenwischvorrichtung (10) nach einem der vorhergehenden Ansprüche, **dadurch gekennzeichnet, dass** das Schneckenrad (28) axial mindestens einen ersten Bereich (44) aufweist, der von der Schnecke (26) gekämmt ist und einen zweiten Bereich (46) der mit dem Blockierelement (36) in Wirkverbindung steht.

8. Scheibenwischvorrichtung (10) nach Anspruch 7, **dadurch gekennzeichnet, dass** die Abtriebswelle (30) drehfest mit einem Wischerarm verbunden ist und der zweite Bereich (46) des Schneckenrades (28) entlang seines Umfangs mindestens eine Nut (42) aufweist, die derart angeordnet ist, dass das Blockierelement (36) das Schneckenrad (28) blockiert, wenn sich der Wischerarm in der Parkposition befindet.

## Claims

1. Windscreen wiper device (10), in particular for a motor vehicle, with at least one, in particular electrically reversible, drive (12) which has an armature shaft (16) bearing a worm (26) which meshes with a worm wheel (28) having an output shaft (30), a blocking element (36) being provided which, when the armature shaft (16) is stationary, mechanically blocks the worm wheel (28) against rotation, **characterized in that** the armature shaft (16) can be displaced axially in order to move the blocking element (36).

2. Windscreen wiper device (10) according to Claim 1, **characterized in that** the armature shaft (16) is held by a spectacles-shaped clamp (32) which has elastic means.

3. Windscreen wiper device (10) according to one of the preceding claims, **characterized in that** the blocking element (36) is capable of releasing the worm wheel (28) by axial displacement of the armature shaft (16) .

4. Windscreen wiper device (10) according to one of the preceding claims, **characterized in that** the blocking element (36) has a latching lug (40) which is capable of engaging in at least one groove (42) on the worm wheel (28).

5. Windscreen wiper device (10) according to one of the preceding claims, **characterized in that** the blocking element (36) is designed as a lever which is mounted by means of a bearing (38) arranged in the vicinity of the armature shaft (16).

6. Windscreen wiper device (10) according to Claim 5, **characterized in that** the bearing (38) is arranged between the armature shaft (16) and the output shaft (30).

7. Windscreen wiper device (10) according to one of the preceding claims, **characterized in that** the worm wheel (28) has axially at least one first region (44) with which the worm (26) meshes and at least one second region (46) which is operatively connected to the blocking element (36).

8. Windscreen wiper device (10) according to Claim 7, **characterized in that** the output shaft (30) is connected in a rotationally fixed manner to a wiper arm, and the second region (46) of the worm wheel (28) has, along its circumference, at least one groove (42) which is arranged in such a manner that the blocking element (36) blocks the worm wheel (28) when the wiper arm is in the parking position.

## Revendications

1. Dispositif d'essuie-glace (10) notamment pour un véhicule automobile comportant au moins un entraînement (12) électrique réversible ayant un arbre d'induit (16) portant une vis (26) engrènant avec une roue à vis (28) munie d'un arbre d'entraînement (30),
un élément de blocage (36) bloquant la roue à vis (28) en rotation lorsque l'arbre d'induit (16) est immobile,
**caractérisé en ce que**
l'arbre d'induit (16) coulisse axialement pour déplacer l'élément de blocage (36).

2. Dispositif d'essuie-glace (10) selon la revendication 1,
**caractérisé en ce que**
l'arbre d'induit (16) est tenu par une lunette de serrage (32) ayant des moyens élastiques.

3. Dispositif d'essuie-glace (10) selon l'une des revendications précédentes,
**caractérisé en ce que**
l'élément de blocage (36) déverrouille la roue à vis (38) par coulissement axial de l'arbre d'induit (16).

4. Dispositif d'essuie-glace (10) selon l'une des revendications précédentes,
**caractérisé en ce que**
l'élément de blocage (36) comporte un bec d'encliquetage (40) qui pénètre dans au moins une rainure (42) de la roue à vis (28).

5. Dispositif d'essuie-glace (10) selon l'une des revendications précédentes,
**caractérisé en ce que**
l'élément de blocage (36) comporte un levier installé par l'intermédiaire d'un palier (38) proche de l'arbre d'induit (16).

6. Dispositif d'essuie-glace (10) selon la revendication 5,
**caractérisé en ce que**
le palier (38) est installé entre l'arbre d'induit (16) et l'arbre d'entraînement (30).

7. Dispositif d'essuie-glace (10) selon l'une des revendications précédentes,
**caractérisé en ce que**
la roue à vis (28) comporte axialement au moins une première zone (44) engrènant avec la vis (26) et une seconde zone (46) coopérant avec l'élément de blocage (36).

8. Dispositif d'essuie-glace (10) selon la revendication 7,
**caractérisé en ce que**
l'arbre d'entraînement (30) est relié solidairement en rotation au bras d'essuie-glace et la seconde zone (46) de la roue à vis (28) comporte au moins une rainure (42) à sa périphérie, cette rainure étant située pour que l'élément de blocage (36) bloque la roue à vis (28) lorsque le bras d'essuie-glace est en position de rangement.
